# EUROPEAN PATENT APPLICATION

(11) **EP 4 570 576 A1**
(43) Date of publication of application: **18.06.2025**
(21) Application number: 23216532.4
(22) Date of filing: 14.12.2023
(51) Int. Cl.: B60L 50/64, B60R 16/04, H01M 50/298, H01M 50/502, H01M 50/503, H01M 50/521

(54) **AN ENERGY STORAGE SYSTEM COMPRISING A PLURALITY OF PARALLELLY ARRANGED BATTERY PACKS**

(71) Applicant: VOLVO TRUCK CORPORATION, 405 08 Göteborg (SE)
(72) Inventor: JONSSON, Kasper, 417 57 GÖTEBORG (SE); IRANNEZHAD, Mike, 411 20 GÖTEBORG (SE); PAWAR, Tejas, 418 70 GÖTEBORG (SE); ROY, Sanchayan, 436 35 GÖTEBORG (SE)
(74) Representative: Kransell & Wennborg KB

(57) **Abstract**

An energy storage system (30, 130, 230) comprising: a plurality of parallelly arranged battery packs (31, 32, 33); a plurality of first separate electrical connector portions (101, 102, 103, 501, 502, 503), each first separate electrical connector portion (101, 102, 103, 501, 502, 503) being associated with a corresponding battery pack (31, 32, 33); a plurality of terminal connectors (120, 122, 124, 520, 522, 524) physically and electrically connecting each battery pack (31, 32, 33) to the associated first separate electrical connector portion (101, 102, 103, 501, 502, 503); one or more second separate electrical connector portions (201, 202, 601), wherein each second separate electrical connector portion (201, 202, 601) physically and electrically connects the first separate electrical connector portions (101, 102, 103, 501, 502, 503). The first and/or second separate electrical connector portions (501, 502, 503, 201, 202) are flexible for allowing relative movement between the battery packs (31, 32, 33).

## Description

### TECHNICAL FIELD

The disclosure relates generally to an energy storage system. In particular aspects, the disclosure relates to an energy storage system comprising a plurality of parallelly arranged battery packs. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in an internal combustion engine. Alternatively, the vehicle may be propelled by electric power in an electric machine. Moreover, hybrid solutions exist in which the vehicle is propelled both by an internal combustion engine and an electric machine. In either way, an energy storage device is used to store the energy needed in order to propel the vehicle. The energy storage device may further be used to power auxiliary loads in the vehicle.

For many vehicles, one or more energy storage devices are comprised in an energy storage system, wherein the energy storage system is configured to power the electric machine for propelling the vehicle, as well as any auxiliary load. For example, for an electric vehicle, the energy storage devices may be batteries or battery packs which are configured to operate the electric machine as well as electrically driven auxiliary equipment. The electric machine and/or the electrically driven auxiliary equipment may be commonly referred to as a load. Several batteries, or several series-connected and/or parallelly connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, several battery packs are included in the energy storage system by being parallelly connected, typically to a common electrical connector or a common traction voltage bus. However, the arrangement of the various electrical connections, e.g. busbars and cables, takes up a lot of space. Moreover, the arrangement of the plurality of battery packs relative to the electrical connections is often adapted with regards to spatial tolerances. Thus, there is a need in the industry for an improved energy storage system comprising parallelly connected battery packs.

### SUMMARY

According to a first aspect of the disclosure, an energy storage system is provided. The energy storage system comprises: a plurality of parallelly arranged battery packs; a plurality of first separate electrical connector portions, each first separate electrical connector portion being associated with a corresponding battery pack; a plurality of terminal connectors physically and electrically connecting each battery pack to the associated first separate electrical connector portion; one or more second separate electrical connector portions, wherein each second separate electrical connector portion physically and electrically connects the first separate electrical connector portions; wherein the first and/or second separate electrical connector portions are flexible for allowing relative movement between the battery packs. The first aspect of the disclosure may seek to overcome problems with spacious energy storage systems. That is, as the battery packs are free to move relative each other owing to the flexible first and/or second separate electrical connector portions, installation tolerances with regards to spatial considerations can be handled in an improved manner. Stated differently, the flexible first and/or second separate electrical connector portions and the battery packs are arranged to enable relative movement between the battery packs. Moreover, by the flexible first and/or second separate electrical connector portions, the energy storage system may be made more robust as the battery packs may move relative each other without negatively effecting the electrical connector portions. A technical benefit may include improved installation of the energy storage system. For example, the energy storage system may be less spacious, as previously described, and be made more robust. In other words, as the first and/or second separate electrical connector portions are flexible, a larger degree of freedom is achieved for the positioning/movement of the battery packs. It should be understood that the one second separate electrical connector portion, or each one of the plurality of second separate electrical connector portions, physically and electrically connects to the plurality of the first separate electrical connector portions. Thus, relative movement between the battery packs and the first and/or second separate electrical connector portions may also be allowed as a result of that the first and/or second separate electrical connector portions are flexible. That the first and/or second separate electrical connector portions are flexible may be defined by that the flexible first and/or second separate electrical connector portions are bendable, or able to be bent or folded without breaking. For example, each one of the flexible first and/or second separate electrical connector portions may have a longitudinal extension from a corresponding first end to a corresponding second end, and may be bendable in a direction perpendicular to the longitudinal extension. Thus, the flexible first and/or second separate electrical connector portions may be configurable in a first, unflexed or unfolded, state in which the corresponding first end is separated from the second end by a first distance, and may be configurable in a second, flexed or folded (or bent), state in which the corresponding first end is separated from the second end by a second distance being smaller than the first distance. Thus, the flexible first and/or second separate electrical connector portions may be reversibly reconfigurable from the first state to the second state, without breaking. The energy storage system of the first aspect is typically an energy storage system for a vehicle.

Optionally in some examples, including in at least one preferred example, the energy storage system further comprises a charging terminal for connecting the battery packs to a charger, and a powering terminal for connecting the battery packs to an inverter or electric machine, wherein the energy storage system is arranged to charge the battery packs by transferring electricity from the charging terminal to the battery packs via the first and second separate electrical connector portions, and to power the inverter or electric machine by transferring electricity from the battery packs to the powering terminal via the same first and second separate electrical connector portions used for charging the battery packs. A technical benefit may include further improved installation of the energy storage system. For example, the energy storage system may be less spacious, as the first and second separate electrical connector portions are used for both charging the battery packs and powering the inverter or electric machine. Thus, there is no need to provide an additional electrical connection, such as e.g. a cable, from the battery packs to a junction box including both the charging terminal and the powering terminal, and then route such electrical connection from the junction box to the corresponding power source and inverter or electric machine. Hereby, the space freed from omitting such additional electrical connection can be used for other purposes. Optionally in some examples, including in at least one preferred example, there is no junction box housing both the charging terminal and the powering terminal. In some examples, there is no separate electrical connection between the charging terminal and the powering terminal not including the first and second separate electrical connector portions. One of the first or second separate electrical connector portions may be physically and electrically connected to the charging terminal by an ingoing electrical connection. Correspondingly, one of the first or second separate electrical connector portions may be physically and electrically connected to the powering terminal by an outgoing electrical connection. Thus, the ingoing electrical connection and the first and second separate electrical connector portions may be arranged to transfer electricity from the charging terminal to the battery packs during charging, and the outgoing electrical connection and the first and second separate electrical connector portions may be arranged to transfer electricity from the battery packs to the powering terminal when powering the inverter and/or electric machine.

Optionally in some examples, including in at least one preferred example, the first separate electrical connector portions are rigid and the one or more second separate electrical connector portions are flexible. A technical benefit may include an efficient structure for allowing relative movement between the battery packs. For example, the battery packs and the associated first separate electrical connector portions may be fixedly arranged relative each other, i.e. not being able to move relative each other, while a first combined battery pack and associated first separate electrical connector portion may be arranged to move relative a second, e.g. neighbouring, combined battery pack and associated first separate electrical connector portion, owing to the flexible second electrical connector portion arranged in between the first and second combined battery pack and associated first separate electrical connector portion.

Optionally in some examples, including in at least one preferred example, the one or more second separate electrical connector portions are rigid and the first separate electrical connector portions are flexible. A technical benefit may include an efficient structure for allowing relative movement between the battery packs. For example, the one or more second separate electrical connector portions is a common second separate electrical connector, such as a common busbar for the battery packs, wherein each one of the battery packs are connected to the common busbar by an associated flexible first separate electrical connector portion, such as e.g. a flexible first cable or flexible first busbar.

Optionally in some examples, including in at least one preferred example, the first separate electrical connector portions are first separate busbars or first separate cables, each one of the first separate busbars or first separate cables being arranged distant to a neighbouring first separate busbar or first separate cable. A technical benefit may include an efficient structure for allowing relative movement between the battery packs. Thus, two neighbouring first separate busbars or first separate cables are separated by a distance larger than zero. In between such two neighbouring first separate busbars or first separate cables, a corresponding second separate electrical connection portion may be arranged.

Optionally in some examples, including in at least one preferred example, the first and/or second separate electrical connector portions are made of a conductive metal. A technical benefit may include advantageous transfer of electricity from the battery packs to the powering terminal and/or the charging terminal. The conductive metal may e.g. be copper or aluminum covered by an insulation system.

Optionally in some examples, including in at least one preferred example, the one or more second separate electrical connector portions are a plurality of second separate electrical connectors arranged distant to each other. A technical benefit may include an efficient structure for allowing relative movement between the battery packs. Thus, two neighbouring second separate electrical connector portions are separated by a distance larger than zero. In between such two neighbouring second separate electrical connector portions, a corresponding first separate electrical connection portion may be arranged.

Optionally in some examples, including in at least one preferred example, the flexible first and/or second separate electrical connector portions are flexible busbars. A technical benefit may include an advantageous combination of flexibility and electrical conductivity. Moreover, a flexible busbar may be more flexible in a first direction, e.g. perpendicular to the longitudinal extension of the flexible busbar, as compared to a second direction, e.g. in the longitudinal extension. Thus, the allowed relative movement between the battery packs may be adapted by the type of the flexible first and/or second separate electrical connector portions (e.g. flexible cables or flexible busbars).

Optionally in some examples, including in at least one preferred example, the flexible busbars are made of braided metal wires or stacked layers of thin metal sheets. A technical benefit may include an advantageous combination of flexibility and electrical conductivity.

Optionally in some examples, including in at least one preferred example, the first and second separate electrical connector portions are alternately arranged along a longitudinal axis. A technical benefit may include an efficient structure for allowing relative movement between the battery packs. The longitudinal axis may e.g. extend through the first and second separate electrical connector portions, typically a direction from the charging terminal to the powering terminal. Thus, every other separate electrical connector portion along the longitudinal axis is a second separate electrical connector portion, and every other separate electrical connector portion along the longitudinal axis is a first separate electrical connector portion.

Optionally in some examples, including in at least one preferred example, the first separate electrical connector portions are flexible to move in a direction perpendicular to the longitudinal axis, and/or the second separate electrical connector portions are flexible to move in a direction along the longitudinal axis. Thus, the allowed relative movement between the battery packs may be adapted by whether or not the first and second separate electrical connector portions are flexible to move in a direction perpendicular to, and/or in a direction along, the longitudinal axis. The first separate electrical connector portions may be arranged to not be flexible to move in a direction along the longitudinal axis, and/or the second separate electrical connector portions may be arranged to not be flexible to move in a direction perpendicular the longitudinal axis.

Optionally in some examples, including in at least one preferred example, the first separate electrical connector portions are housed in corresponding first separate junction boxes. A technical benefit may include protecting the components from electromagnetic interference. Thus, a first separate junction box may be provided for each one of the first separate electrical connector portions. The flexible second separate electrical connector portions may be arranged to combine the first separate junction boxes.

Optionally in some examples, including in at least one preferred example, the one or more second separate electrical connector portions are housed in corresponding one or more second separate junction boxes. A technical benefit may include protecting the components from electromagnetic interference. For example, the one or more second separate electrical connector portions is a common second separate electrical connector housed in a second separate junction box.

Optionally in some examples, including in at least one preferred example, the energy storage system further comprises a plurality of battery disconnection units, each one of the battery disconnection units being associated with a corresponding battery pack. A technical benefit may include improved control of individual battery packs. The battery disconnection unit may e.g. comprise at least one contactor for connecting and disconnecting the battery pack from the associated first separate electrical connection portion and/or the one or more second separate electrical connector portions. The at least one contactor may be a positive contactor and a negative contactor. For example, the positive contactor may be arranged in a positive busbar of the battery disconnection unit for electrically connecting and disconnecting the positive side of the terminal connector of the corresponding battery pack and the associated first separate electrical connector portion. Correspondingly, the negative contactor may be arranged in a negative busbar of the battery disconnection unit for electrically connecting and disconnecting the negative side of the terminal connector of the corresponding battery pack and the associated first separate electrical connector portion.

Optionally in some examples, including in at least one preferred example, each one the battery packs is arranged in a battery pack housing, wherein the associated battery disconnection unit for a battery pack is arranged in the corresponding battery pack housing. A technical benefit may include improved installation of the energy storage system. For example, the energy storage system may be less spacious as the battery disconnection unit is included in the battery pack housing.

Optionally in some examples, including in at least one preferred example, the energy storage system may comprise one or more carrier plates arranged to support the first and/or second separate electrical connector portions. Moreover, a mechanical vibration compensator unit may be arranged between a carrier plate and the corresponding first and/or second separate electrical connector portions.

According to a second aspect of the disclosure, a vehicle comprising the energy storage system of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric machine for propelling the vehicle, the electric machine being powered by the energy storage system.

Applicable to both the first and second aspects of the disclosure, each one of the plurality of first separate electrical connector portions, the terminal connectors and/or the one or more second separate electrical connector portions may comprise a corresponding positive and negative connector. That is, each one of the plurality of first separate electrical connector portions may comprise a positive conductor and a negative conductor, each one of the terminal connectors may comprise a positive conductor or positive terminal and a negative conductor or negative terminal, and/or each one of the one or more second separate electrical connector portions may comprise a positive conductor and a negative conductor. Correspondingly, the ingoing electrical connection and/or the outgoing electrical connection may comprise a corresponding positive conductor and negative conductor (e.g. as separate positive and negative cables).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising an electric machine for propelling the vehicle and an energy storage system for powering the electric machine according to one example.
**FIG. 2** is an exemplary, partly schematic, top view of an energy storage system according to one example.
**FIG. 3** is an exemplary, partly schematic, top view of an energy storage system according to one example.
**FIG. 4** shows details of the energy storage system of Fig. 2 according to one example.
**FIG. 5** shows details of two battery packs of an energy storage system according to one example.

### DETAILED DESCRIPTION

The detailed description set forth below provides information and examples of the disclosed technology with sufficient detail to enable those skilled in the art to practice the disclosure.

The disclosed technology may solve the problem with spacious energy storage systems. The disclosed technology provides an energy storage system in which the battery packs are free to move relative each other owing to flexible first and/or second separate electrical connector portions. Hereby, installation tolerances with regards to spatial considerations can be handled in an improved manner. Moreover, by the flexible first and/or second separate electrical connector portions, the energy storage system may be made more robust as the battery packs may move relative each other without negatively affecting the electrical connector portions. A technical benefit may include improved installation of the energy storage system.

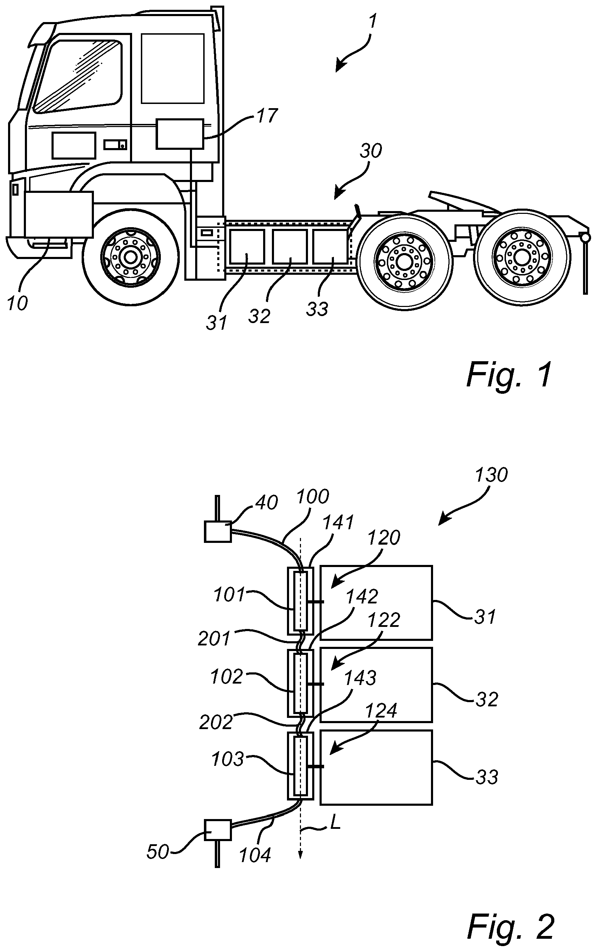

**FIG. 1** shows a vehicle 1 in the form of an exemplary heavy-duty truck. The vehicle 1 is an electric vehicle, such as a full electric vehicle or a hybrid, comprising at least one electric machine 10 (as an electric traction machine) powered by an energy storage system 30, wherein in the example of Fig. 1, the energy storage system 30 comprises three parallelly arranged battery packs 31, 32, 33. The three battery packs 31, 32, 33 are configured to power at least one load, such as the electric machine 10. Moreover, the vehicle 1 comprises a control unit 17 arranged and configured for controlling at least parts of the operation of the energy storage system 30, such as the operation of a charging the three battery packs 31, 32, 33 by a power source, and/or powering the electric machine 10 by the three battery packs 31, 32, 33. The vehicle 1 typically further comprises other parts of the powertrain such as transmission, drive shafts and wheels (not shown in detail). The electric machine 10 may be operated as an electric motor consuming electricity provided by the at least one battery pack arrangement 31, e.g. to provide propulsion power, and may be operated as a generator to generate electricity to charge the at least one battery pack arrangement 31.

In **FIG. 2****,** an exemplary energy storage system 130 is shown. The energy storage system 130 of Fig. 2 may be used as the energy storage system 30 in the vehicle 1 of Fig. 1. The energy storage system 130 comprises a plurality of parallelly arranged battery packs 31, 32, 33, similar or the same as the battery packs described with reference to Fig. 1. The energy storage system 130 further comprises a plurality of first separate electrical connector portions 101, 102, 103, each first separate electrical connector portion 101, 102, 103, being associated with a corresponding battery pack 31, 32, 33. Thus, in the example of Fig. 2, a first battery pack 31 is associated with a first one 101 of the first separate electrical connector portions 101, 102, 103, a second battery pack 32 is associated with a second one 102 of the first separate electrical connector portions 101, 102, 103, and a third battery pack 33 is associated with a third one 103 of the first separate electrical connector portions 101, 102, 103. In the following, the first separate electrical connector portions 101, 102, 103 will mainly be described together.

The energy storage system 130 further comprises a plurality of terminal connectors 120, 122, 124, physically and electrically connecting each battery pack 31, 32, 33 to the associated first separate electrical connector portion 101, 102, 103. Thus, a first terminal connector 120 physically and electrically connects, such as physically and electrically directly connects, the first battery pack 31 to the first one 101 of the first separate electrical connector portions 101, 102, 103, a second terminal connector 122 physically and electrically connects, such as physically and electrically directly connects, the second battery pack 32 to the second one 102 of the first separate electrical connector portions 101, 102, 103, and a third terminal connector 124 physically and electrically connects, such as physically and electrically directly connects, the third battery pack 33 to the third one 103 of the first separate electrical connector portions 101, 102, 103.

The energy storage system 130 further comprises a plurality of second separate electrical connector portions 201, 202 wherein the second separate electrical connector portions 201, 202 physically and electrically connects the plurality of first separate electrical connector portions 101, 102, 103. Thus, a first one 201 of the second separate electrical connector portions 201, 202 physically and electrically connects, such as physically and electrically directly connects, the first one 101 and the second one 102 of the first separate electrical connector portions 101, 102, 103, a second one 202 of the second separate electrical connector portions 201, 202 physically and electrically connects, such as physically and electrically directly connects, the second one 102 and the third one 103 of the first separate electrical connector portions 101, 102, 103. The third one 103 of the first separate electrical connector portions 101, 102, 103 is physically and electrically connected, such as physically and electrically directly connected, with an outgoing connection 104. Typically, all of the first and second separate electrical connector portions 101, 102, 103, 201, 202 are made of a conductive metal, e.g. copper or aluminum.

All of the first separate electrical connector portions 101, 102, 103 are housed in corresponding first separate junction boxes 141, 142, 143, schematically shown in Fig. 2. Hereby, the components in the first separate electrical connector portions 101, 102, 103 may be protected from electromagnetic interference.

As indicated by the slightly curved components of the second separate electrical connector portions 201, 202, the second separate electrical connector portions 201, 202 are flexible for allowing relative movement between the battery packs 31, 32, 33. That is, owing to the flexible second separate electrical connector portions 201, 202 the first battery pack 31 (and associated first separate electrical connector portion 101) is free to move relative to the second battery pack 32 (and associated first separate electrical connector portion 102) and relative to the third battery pack 33 (and associated first separate electrical connector portion 103). Hereby, positioning and installation tolerances with regards to spatial considerations can be handled in an improved manner, and the energy storage system 130 may be less spacious and/or be made more robust. The flexible second separate electrical connector portions 201, 202 are in Fig. 2 flexible busbars 201, 202 made of braided metal wires or stacked layers of thin metal sheets.

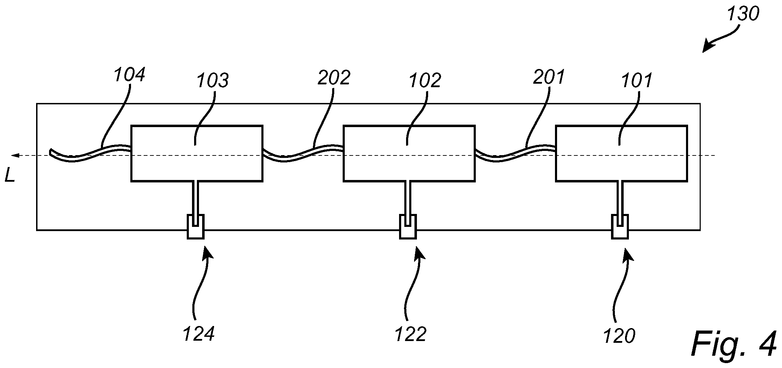

In the example of Fig. 2, the first separate electrical connector portions 101, 102, 103 are rigid and not flexible, as they are embodied as first separate busbars 101, 102, 103. Each one of the first separate busbars 101, 102, 103 are arranged distant to a neighbouring first separate busbar 101, 102, 103. Thus, two neighbouring first separate busbars 101, 102, 103, for example a first one 101 and a second one 102 of the first separate busbars 101, 102, 103 are separated by a distance larger than zero. In between such two neighbouring first separate busbars 101, 102, a corresponding second separate electrical connection portion, here the first one 201 of the second separate electrical connector portions 201, 202 is arranged. Correspondingly, the plurality of second separate electrical connector portions 201, 202 are arranged distant to each other. In between two neighbouring second separate electrical connector portions, e.g. the first one 201 and second one 202 of the second separate electrical connector portions 201, 202, a corresponding first separate electrical connection portion, here the second one 102 of the first separate electrical connector portions, is arranged. Thus, along a longitudinal axis L, better shown in **FIG. 4** showing the first and second separate electrical connector portions 101, 102, 103, 201, 202 and the terminal connectors 120, 122, 124, the first and second separate electrical connector portions 101, 102, 103, 201, 202 are alternately arranged along the longitudinal axis L. The longitudinal axis L extends through the first and second separate electrical connector portions 101, 102, 103, 201, 202 in the same direction as the charging terminal 40 to the powering terminal 50.

The flexible second separate electrical connector portions 201, 202, i.e. the flexible busbars 201, 202 are flexible to move at least in a direction along the longitudinal axis L (e.g. by being bent or folded in a direction perpendicular to the longitudinal axis L).

The energy storage system 130 of the example in Fig. 2 further comprises a charging terminal 40 connecting the battery packs 31, 32, 33 to a charger (not shown). As shown in Fig. 2, the first one 101 of the first separate electrical connector portions 101 is physically and electrically connected, such as physically and electrically directly connected, to an ingoing electrical connection 100, wherein the ingoing electrical connection 100 is electrically connected to the charging terminal. The energy storage system 130 further comprises a powering terminal 50 for connecting the battery packs 31, 32, 33 to an inverter or electric machine (such as electric machine 10 of Fig. 1). As shown in Fig. 2, the outgoing electrical connection 104 is electrically connected to the powering terminal 50. However, it should be mentioned that a third one (not shown) of the second separate electrical connector portions 201, 202 may be included and arranged between the third one 103 of the first separate electrical connector portions 101, 102, 103 and the outgoing electrical connection 104.

Thus, the battery packs 31, 32, 33 may be charged by transferring electricity from the charging terminal 40 to the battery packs 31, 32, 33 via the ingoing electrical connection 100, and the first and second separate electrical connector portions 101, 102, 103, 201, 202, and may power the inverter or electric machine 10 by transferring electricity from the battery packs 31, 32, 33 to the powering terminal 50 via the outgoing electrical connection 104 and the same first and second separate electrical connector portions 101, 102, 103, 201, 202. Hereby, the energy storage system 130 may be made less spacious, as the first and second separate electrical connector portions 101, 102, 103, 201, 202 are used for both charging the battery packs 31, 32, 33 and powering the inverter or electric machine 10. Preferably, there is no separate electrical connection between the charging terminal 40 and the powering terminal 50 except for that provided by the first and second separate electrical connector portions 101, 102, 103, 201, 202 together with the ingoing and outgoing electrical connections 100, 104. For example, there is no junction box housing both the charging terminal 40 and the powering terminal 50.

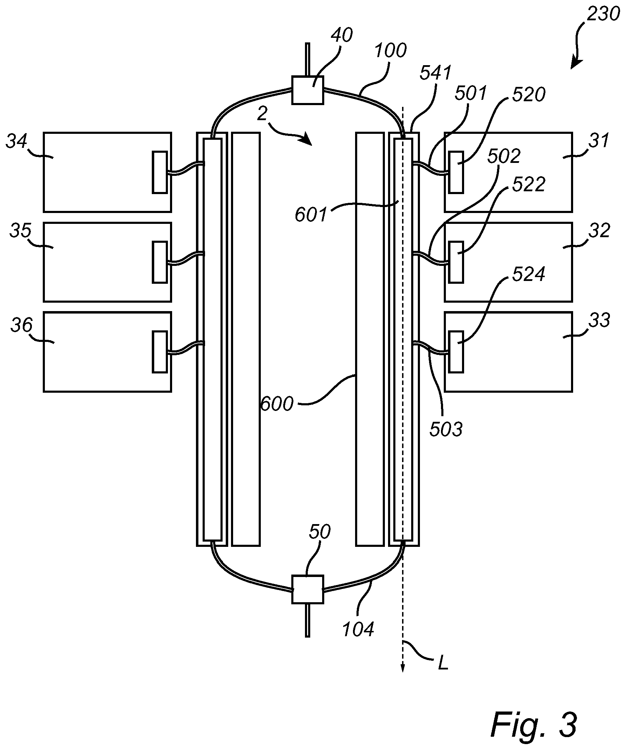

Turning to **FIG. 3****,** an exemplary energy storage system 230 is shown. The energy storage system 230 of Fig. 3 may be used as the energy storage system 30 in the vehicle 1 of Fig. 1. The energy storage system 230 comprises a plurality of parallelly arranged battery packs 31, 32, 33, similar or the same as the battery packs described with reference to Figs. 1 and 2. The energy storage system 230 further comprises a plurality of first separate electrical connector portions 501, 502, 503, each first separate electrical connector portion 501, 502, 503, being associated with a corresponding battery pack 31, 32, 33. Thus, in the example of Fig. 3, a first battery pack 31 is associated with a first one 501 of the first separate electrical connector portions 501, 502, 503, a second battery pack 32 is associated with a second one 502 of the first separate electrical connector portions 501, 502, 503, and a third battery pack 33 is associated with a third one 503 of the first separate electrical connector portions 501, 502, 503. In the following, the first separate electrical connector portions 501, 502, 503 will mainly be described together.

The energy storage system 230 further comprises a plurality of terminal connectors 520, 522, 524, physically and electrically connecting each battery pack 31, 32, 33 to the associated first separate electrical connector portion 501, 502, 503. Thus, a first terminal connector 520 physically and electrically connects, such as physically and electrically directly connects, the first battery pack 31 to the first one 501 of the first separate electrical connector portions 501, 502, 503, a second terminal connector 522 physically and electrically connects, such as physically and electrically directly connects, the second battery pack 32 to the second one 502 of the first separate electrical connector portions 501, 502, 503, and a third terminal connector 524 physically and electrically connects, such as physically and electrically directly connects, the third battery pack 33 to the third one 503 of the first separate electrical connector portions 501, 502, 503.

The energy storage system 130 further comprises a second separate electrical connector portion 601 physically and electrically connecting, such as physically and electrically directly connecting, the plurality of first separate electrical connector portions 501, 502, 503. Thus, the second separate electrical connector portion 601 is a common second separate electrical connector for the plurality of first separate electrical connector portions 501, 502, 503. Typically, all of the first and second separate electrical connector portions 501, 502, 503, 601 are made of a conductive metal, e.g. copper or aluminum.

The second separate electrical connector portion 601 is in Fig. 2 housed in a corresponding second separate junction box 541. Hereby, the components in the second separate electrical connector portion 601 may be protected from electromagnetic interference.

As indicated by the slightly curved components of the first separate electrical connector portions 501, 502, 503, the first separate electrical connector portions 501, 502, 503 are flexible for allowing relative movement between the battery packs 31, 32, 33. That is, owing to the flexible first separate electrical connector portions 501, 502, 503, the first battery pack 31 (and associated first terminal connector 520) is free to move relative to the second battery pack 32 (and associated second terminal connector 522) and relative to the third battery pack 33 (and associated third terminal connector 524). Hereby, positioning and installation tolerances with regards to spatial considerations can be handled in an improved manner, and the energy storage system 230 may be less spacious and/or be made more robust. The flexible first separate electrical connector portions 501, 502, 503 are in Fig. 3 flexible cables 501, 502, 503.

In the example of Fig. 3, the second separate electrical connector portion 601 is rigid and not flexible, as it is embodied as a second separate busbar 601.

Each one of the first separate cables 501, 502, 503 are arranged distant to a neighbouring first separate cable 501, 502, 503. Thus, two neighbouring first separate cables 501 ,502, 503, for example a first one 501 and a second one 502 of the first separate cables 501, 502, 503 are separated by a distance larger than zero. In between such two neighbouring first separate cables 501, 502, a portion of the second separate electrical connection portion 601 is arranged. The flexible first separate electrical connector portions 501, 502, 503, i.e. the first flexible cables 501, 502, 503 are flexible to move at least in a direction perpendicular to the longitudinal axis L (e.g. by being bent or folded in a direction parallel to the longitudinal axis L).

Correspondingly to the energy storage system 130 of Fig. 2, the energy storage system 230 of the example in Fig. 3 further comprises a charging terminal 40 connecting the battery packs 31, 32, 33 to a charger (not shown) via an ingoing electrical connection 100 (physically and electrically connected, such as physically and electrically directly connected, to the second separate electrical connector portion 601) and comprises a powering terminal 50 for connecting the battery packs 31, 32, 33 to an inverter or electric machine (such as electric machine 10 of Fig. 1) via an outgoing electrical connection 104 (physically and electrically connected, such as physically and electrically directly connected, to the second separate electrical connector portion 601).

Thus, the battery packs 31, 32, 33 may be charged by transferring electricity from the charging terminal 40 to the battery packs 31, 32, 33 via the ingoing electrical connection 100, and the first and second separate electrical connector portions 501, 502, 503, 601 and may power the inverter or electric machine 10 by transferring electricity from the battery packs 31, 32, 33 to the powering terminal 50 via the outgoing electrical connection 104 and the same first and second separate electrical connector portions 501, 502, 503, 601. Hereby, the energy storage system 230 may be made less spacious, as the first and second separate electrical connector portions 501, 502, 503, 601 are used for both charging the battery packs 31, 32, 33 and powering the inverter or electric machine 10. Preferably, there is no separate electrical connection between the charging terminal 40 and the powering terminal 50 except for that provided by the first and second separate electrical connector portions 501, 502, 503, 601 together with the ingoing and outgoing electrical connections 100, 104.

The first, second and third battery pack 31, 32, 33 of the energy storage system 230 may be a first set of battery packs, and the energy storage system 230 may further comprise a second set of battery packs, for instance a fourth battery pack 34, a fifth battery pack 35 and a sixth battery pack 36 parallelly connected to the first set of battery packs 31, 32, 33. The second set of battery packs 34, 35, 36 may be arranged in a corresponding manner as the first set of battery packs 31, 32, 33, i.e. with corresponding plurality of first separate electrical connector portions, plurality of terminal connectors, and second separate electrical connector portion (not described in detail again). Correspondingly, the energy storage system 130 may comprise such second set of battery packs with corresponding plurality of first separate electrical connector portions, plurality of terminal connectors, and plurality of second separate electrical connector portions. The first and second set of battery packs 31, 32, 33, 34, 35, 36 are thus electrically connected in between the charging terminal 40 and the powering terminal 50, e.g. on opposite sides of a center frame structure of the vehicle. As can be seen in Fig. 3, there is no separate electrical connection routed from the charging terminal 40 to the powering terminal 50 in the center frame structure.

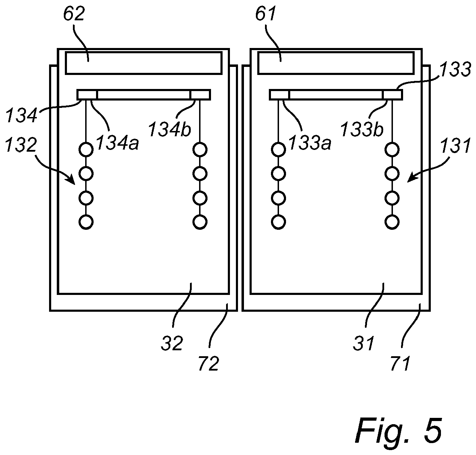

In **FIG. 5****,** two of the battery packs 31, 32 of the energy storage system 30, 130, 230 of Figs. 1-3 are shown in greater detail. The first battery pack 31 comprises a first battery pack housing 71, and a plurality of battery cells 131 arranged in the first battery pack housing 71. The plurality of battery cells 131 are electrically connected to a battery pack terminal 133, typically a positive terminal 133a and a negative terminal 133b. Correspondingly, the second battery pack 32 comprises a second battery pack housing 72, and a plurality of battery cells 132 arranged in the second battery pack housing 72. The plurality of battery cells 132 are electrically connected to a battery pack terminal 134, typically a positive terminal 134a and a negative terminal 134b. Moreover, each one of the first and second battery packs 31, 32 is associated with a corresponding battery disconnection unit 61, 62. Thus, a first battery disconnection unit 61 is arranged in the first battery pack housing 71 and is electrically connected to the battery pack terminal 133 of the first battery pack 31, and a second battery disconnection 62 is arranged in the second battery pack housing 72 and is electrically connected to the battery pack terminal 134 of the second battery pack 32.

Example 1. An energy storage system comprising: a plurality of parallelly arranged battery packs; a plurality of first separate electrical connector portions, each first separate electrical connector portion being associated with a corresponding battery pack; a plurality of terminal connectors physically and electrically connecting each battery pack to the associated first separate electrical connector portion; one or more second separate electrical connector portions, wherein each second separate electrical connector portion physically and electrically connects the first separate electrical connector portions; wherein the first and/or second separate electrical connector portions are flexible for allowing relative movement between the battery packs.

Example 2. The energy storage system of example 1, comprising a charging terminal for connecting the battery packs to a charger, and a powering terminal for connecting the battery packs to an inverter or electric machine, wherein the energy storage system is arranged to charge the battery packs by transferring electricity from the charging terminal to the battery packs via the first and second separate electrical connector portions, and to power the inverter or electric machine by transferring electricity from the battery packs to the powering terminal via the same first and second separate electrical connector portions used for charging the battery packs.

Example 3. The energy storage system of any of examples 1-2, wherein the first separate electrical connector portions are rigid and the one or more second separate electrical connector portions are flexible.

Example 4. The energy storage system of any of examples 1-2, wherein the one or more second separate electrical connector portions are rigid and the first separate electrical connector portions are flexible.

Example 5. The energy storage system of any of examples 1-4, wherein the first separate electrical connector portions are first separate busbars or first separate cables, each one of the first separate busbars or first separate cables being arranged distant to a neighbouring first separate busbar or first separate cable.

Example 6. The energy storage system of any of examples 1-5, wherein the first and/or second separate electrical connector portions are made of a conductive metal.

Example 7. The energy storage system of any of examples 1-6, wherein the one or more second separate electrical connector portions are a plurality of second separate electrical connectors arranged distant to each other.

Example 8. The energy storage system of any of examples 1-7, wherein the flexible first and/or second separate electrical connector portions are flexible busbars.

Example 9. The energy storage system of example 8, wherein the flexible busbars are made of braided metal wires or stacked layers of thin metal sheets.

Example 10. The energy storage system of any of examples 1-8, wherein the first and second separate electrical connector portions are alternately arranged along a longitudinal axis.

Example 11. The energy storage system of example 10, wherein the first separate electrical connector portions are flexible to move in a direction perpendicular to the longitudinal axis, and/or wherein the second separate electrical connector portions are flexible to move in a direction along the longitudinal axis.

Example 12. The energy storage system of any of examples 1-11, wherein the first separate electrical connector portions are housed in corresponding first separate junction boxes.

Example 13. The energy storage system of any of examples 1-11, wherein the one or more second separate electrical connector portions are housed in corresponding one or more second separate junction boxes.

Example 14. The energy storage system of any of examples 1-13, further comprising a plurality of battery disconnection units, each one of the battery disconnection units being associated with a corresponding battery pack.

Example 15. The energy storage system of example 14, wherein each one the battery packs is arranged in a battery pack housing, and wherein the associated battery disconnection unit for a battery pack is arranged in the corresponding battery pack housing.

Example 16. The energy storage system of example 2, wherein there is no junction box housing both the charging terminal and the powering terminal.

Example 17. The energy storage system of any of examples 1-16, wherein each one of the plurality of first separate electrical connector portions, the terminal connectors and/or the one or more second separate electrical connector portions comprise a corresponding positive and negative connector.

Example 18. A vehicle comprising the energy storage system of any of examples 1-17.

Example 19. The vehicle of example 18, further comprising an electric machine for propelling the vehicle, the electric machine being powered by the energy storage system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (30, 130, 230) comprising:
- a plurality of parallelly arranged battery packs (31, 32, 33),
- a plurality of first separate electrical connector portions (101, 102, 103, 501, 502, 503), each first separate electrical connector portion (101, 102, 103, 501, 502, 503) being associated with a corresponding battery pack (31, 32, 33),
- a plurality of terminal connectors (120, 122, 124, 520, 522, 524) physically and electrically connecting each battery pack (31, 32, 33) to the associated first separate electrical connector portion (101, 102, 103, 501, 502, 503),
- one or more second separate electrical connector portions (201, 202, 601), wherein each second separate electrical connector portion (201, 202, 601) physically and electrically connects the first separate electrical connector portions (101, 102, 103, 501, 502, 503), wherein the first and/or second separate electrical connector portions (501, 502, 503, 201, 202) are flexible for allowing relative movement between the battery packs (31, 32, 33).

2. The energy storage system (30, 130, 230) of claim 1, comprising a charging terminal (40) for connecting the battery packs (31, 32, 33) to a charger, and a powering terminal (50) for connecting the battery packs (31, 32, 33) to an inverter or electric machine (10), wherein the energy storage system (30, 130, 230) is arranged to charge the battery packs (31, 32, 33) by transferring electricity from the charging terminal (40) to the battery packs (31, 32, 33) via the first and second separate electrical connector portions (101, 102, 103, 501, 502, 503, 201, 202, 601), and to power the inverter or electric machine (10) by transferring electricity from the battery packs (31, 32, 33) to the powering terminal (50) via the same first and second separate electrical connector portions (101, 102, 103, 501, 502, 503, 201, 202, 601) used for charging the battery packs (31, 32, 33).

3. The energy storage system (130) of any of claims 1-2, wherein the first separate electrical connector portions (101, 102, 103) are rigid and the one or more second separate electrical connector portions (201, 202, 103) are flexible.

4. The energy storage system (230) of any of claims 1-2, wherein the one or more second separate electrical connector portions (601) are rigid and the first separate electrical connector portions (501, 502, 503) are flexible.

5. The energy storage system (30, 130, 230) of any of claims 1-4, wherein the first separate electrical connector portions (101, 102, 103, 501, 502, 503) are first separate busbars (101, 102, 103) or first separate cables (501, 502, 503), each one of the first separate busbars (101, 102, 103) or first separate cables (501, 502, 503) being arranged distant to a neighbouring first separate busbar (101, 102, 103) or first separate cable (501, 502, 503).

6. The energy storage system (30, 130, 230) of any of claims 1-5, wherein the first and/or second separate electrical connector portions (101, 102, 103, 501, 502, 503, 201, 202, 601) are made of a conductive metal.

7. The energy storage system (130) of any of claims 1-6, wherein the one or more second separate electrical connector portions (201, 202) are a plurality of second separate electrical connectors (201, 202) arranged distant to each other.

8. The energy storage system (30, 130, 230) of any of claims 1-7, wherein the flexible first and/or second separate electrical connector portions (501, 502, 503, 201, 202) are flexible busbars.

9. The energy storage system (30, 130, 230) of claim 8, wherein the flexible busbars are made of braided metal wires or stacked layers of thin metal sheets.

10. The energy storage system (30, 130) of any of claims 1-8, wherein the first and second separate electrical connector portions (101, 102, 103, 501, 502, 503, 201, 202) are alternately arranged along a longitudinal axis (L).

11. The energy storage system (30, 130, 230) of claim 10, wherein the first separate electrical connector portions (501, 502, 503) are flexible to move in a direction perpendicular to the longitudinal axis (L), and/or wherein the second separate electrical connector portions (201, 202) are flexible to move in a direction along the longitudinal axis (L).

12. The energy storage system (130) of any of claims 1-11, wherein the first separate electrical connector portions (101, 102, 103) are housed in corresponding first separate junction boxes.

13. The energy storage system (230) of any of claims 1-11, wherein the one or more second separate electrical connector portions (601) are housed in corresponding one or more second separate junction boxes.

14. The energy storage system of claim 13, wherein each one the battery packs (31, 32) is arranged in a battery pack housing (71, 72), and wherein the associated battery disconnection unit (61, 62) for a battery pack (31, 32) is arranged in the corresponding battery pack housing (71, 72).

15. A vehicle (1) comprising the energy storage system (30, 130, 230) of any of claims 1-14.
